# EUROPEAN PATENT APPLICATION

(11) **EP 3 964 376 A1**
(43) Date of publication of application: **09.03.2022**
(21) Application number: 21195512.5
(22) Date of filing: 08.09.2021
(51) Int. Cl.: B60H 1/00

(54) **AIR CONDITIONING SYSTEM FOR OFF-ROAD VEHICLE**

(30) Priority: 08.09.2020 US 202063075781 P; 07.09.2021 US 202117467840
(71) Applicant: Gordon, Robby, Charlotte, NC 28269 (US)
(72) Inventor: Gordon, Robby, Charlotte, NC 28269 (US)
(74) Representative: Dehns

(57) **Abstract**

Off-road vehicle (100) including an enclosed cabin (104) and an air conditioning system for cooling an airstream, wherein the air conditioning system includes a compressor that may be driven by an engine of the vehicle (100) or a dedicated motor, a condenser that may be positioned behind a grill at a front of the off-road vehicle (100) or at a location where outside air enters an engine compartment of the off-road vehicle (100), an evaporator and a blower to direct the cooled airstream into the enclosed cabin (104), one or more adjustable vents being disposed within the enclosed cabin (104) and positioned to advantageously direct the cooled airstream to occupants within the enclosed cabin (104) and climate control switches being disposed in a dashboard of the off-road vehicle (100) and configured to enable the occupants to operate the air conditioning system.

## Description

### PRIORITY

This application claims the benefit of and priority to U.S. Provisional Application, entitled "Air Conditioning System For Off-Road Vehicle," filed on September 8, 2020, and having application serial number 63/075,781.

### FIELD

Embodiments of the present disclosure generally relate to the field of vehicle amenities. More specifically, embodiments of the disclosure relate to an air conditioning system and methods for controlling air quality within an off-road vehicle.

### BACKGROUND

Off-road vehicles enjoy an enthusiastic following because of their many uses and versatility. As a result, several types of motorsports involve racing of various types of off-road vehicles. For example, competitions exist that are dedicated to various types of terrain, such as rally, desert racing, and rock-crawling. Besides their use in various motorsports, off-road vehicles commonly are used for sight-seeing and traveling to areas that may not be accessed by way of standard, paved roads.

The use of higher clearance, higher traction vehicles enables off-road vehicles to access trails and roads having rough, low traction surfaces that may not be traversed using a standard, on-road vehicle. As such, off-road vehicles typically comprise larger wheels, wider tires, and suspension configurations that are specifically engineered for use in off-road applications. As a consequence of such suspension configurations, as well as the rough terrain typically traversed, driver and passenger safety is a crucial concern. For example, drivers and passengers typically must be wear safety restraints during off-road travel. A wide variety of different types of safety harnesses are available for use with off-road vehicles.

Unlike on-road vehicles, such as passenger cars, many off-road vehicles are open, often lacking windows, doors, and body panels common to passenger cars. A frame comprised of multiple structural members with attached doors is configured to protect the occupants in the event of a rollover situation. Given that off-road vehicles typically travel in rough, exotic environments that may subject occupant to extreme temperatures, such as high or cold temperatures typical of desert climates, there is a desire to incorporate climate control amenities into off-road vehicles so as to increase the comfort of the drivers and passengers.

### SUMMARY

An apparatus and methods are provided for an air conditioning system for an off-road vehicle that includes an enclosed cabin. The air conditioning system includes a compressor that may be disposed in any advantageous location of the off-road vehicle. The compressor may be driven by an engine of the vehicle or a dedicated motor. A condenser comprising the air conditioning system may be disposed in any location of the off-road vehicle that receives a steady supply of outside air. The condenser may be positioned behind a grill at a front of the off-road vehicle or at a location where the outside air enters an engine compartment of the off-road vehicle. An evaporator and a blower are located in close proximity to the enclosed cabin such that a cooled airstream may be directed into the enclosed cabin. One or more ducted vents are disposed within the enclosed cabin and positioned to advantageously direct the cooled airstream to occupants within the enclosed cabin. Climate control switches are disposed in a dashboard of the off-road vehicle and configured to enable the occupants to operate the air conditioning system.

In an exemplary embodiment, a climate control system for an off-road vehicle comprises: an enclosed cabin comprising the off-road vehicle; an air conditioning system for cooling an airstream; and one or more ducted vents for directing the airstream into the enclosed cabin.

In another exemplary embodiment, the air conditioning system includes a compressor that may be disposed in any advantageous location of the off-road vehicle. In another exemplary embodiment, the compressor is driven by an engine comprising the off-road vehicle. In another exemplary embodiment, the compressor is located in an engine compartment within a rear portion of the off-road vehicle. In another exemplary embodiment, the compressor is driven by way of a separate or dedicated motor.

In another exemplary embodiment, a condenser comprising the air conditioning system may be disposed in any location of the off-road vehicle that receives a steady supply of outside air. In another exemplary embodiment, the condenser is located behind a grill at a front of the off-road vehicle. In another exemplary embodiment, the condenser is disposed at a location where the outside air enters an engine compartment of the off-road vehicle. In another exemplary embodiment, the outside air is moved through the condenser by way of a dedicated fan. In another exemplary embodiment, the outside air is moved through the condenser by way of an engine cooling fan.

In another exemplary embodiment, the air conditioning system includes an evaporator configured for cooling the airstream. In another exemplary embodiment, a blower is configured to direct the airstream through the evaporator and push the airstream into the enclosed cabin. In another exemplary embodiment, the evaporator and the blower are located in close proximity to the enclosed cabin such that the airstream may be directed into the cabin before increasing in temperature. In another exemplary embodiment, the evaporator and the blower are disposed in a front portion of the off-road vehicle in front of a dashboard. In another exemplary embodiment, the evaporator and the blower are housed within the enclosed cabin below a dashboard. In another exemplary embodiment, the evaporator and the blower are disposed in a suitable location of the off-road vehicle whereby the airstream may be advantageously used to cool the environment within the enclosed cabin.

In another exemplary embodiment, the one or more ducted vents are disposed within the enclosed cabin and positioned to advantageously direct the airstream to occupants within the enclosed cabin. In another exemplary embodiment, the one or more ducted vents are disposed in a dashboard for directing the airstream to a driver and a front passenger. In another exemplary embodiment, the one or more ducted vents are disposed in a center console for directing the airstream to rear passengers.

In another exemplary embodiment, the one or more ducted vents are each configured to enable an adjustment of the quantity of the airstream passing through the vent. In another exemplary embodiment, the one or more ducted vents include adjustable louvers configured to direct the airstream within the enclosed cabin. In another exemplary embodiment, the louvers are adjustable vertically and horizontally.

In another exemplary embodiment, the air conditioning system includes climate control switches disposed in a dashboard of the off-road vehicle and configured to enable occupants of the enclosed cabin to control operation of the air conditioning system. In another exemplary embodiment, the climate control switches are disposed in a central location of the dashboard such that both the driver and the front passenger have access to the climate control switches. In another exemplary embodiment, the climate control switches provide at least an On/Off switch, a temperature selector, and an airflow control.

In an exemplary embodiment, a method for a climate control system for an off-road vehicle comprises: forming an enclosed cabin comprising the off-road vehicle; incorporating an air conditioning system into the off-road vehicle; disposing one or more ducted vents within the enclosed cabin; configuring the air conditioning system for cooling an airstream; and routing the airstream into the enclosed cabin by way of the one or more ducted vents.

In another exemplary embodiment, incorporating includes disposing a compressor in any advantageous location of the off-road vehicle. In another exemplary embodiment, incorporating includes disposing a condenser in any location of the off-road vehicle that receives a steady supply of outside air. In another exemplary embodiment, disposing includes mounting the condenser behind a grill at a front of the off-road vehicle. In another exemplary embodiment, incorporating includes disposing an evaporator and a blower in close proximity to the enclosed cabin such that the airstream may be directed into the cabin before increasing in temperature.

These and other features of the concepts provided herein may be better understood with reference to the drawings, description, and appended claims.

### BRIEF DESCRIPTION OF THE DRAWINGS

The drawings refer to embodiments of the present disclosure in which:
Figure 1 illustrates a front view of an exemplary embodiment of an off-road vehicle that is particularly suitable for implementation of an air conditioning system in accordance with the present disclosure;
Figure 2 illustrates a side view of the off-road vehicle shown in Fig. 1;
Figure 3 illustrates a top view of the off-road vehicle of Fig. 1;
Figure 4 illustrates an exemplary embodiment of an air conditioning system that may be incorporated into an off-road vehicle;
Figure 5 illustrates an exemplary embodiment of a dashboard comprising an off-road vehicle and including ventilation ducts suitable for use with an air conditioning system; and
Figure 6 illustrates an exemplary embodiment of a center console including ducts for supplying conditioned air to passengers seated in a rear of an off-road vehicle, according to the present disclosure.

While the present disclosure is subject to various modifications and alternative forms, specific embodiments thereof have been shown by way of example in the drawings and will herein be described in detail. The invention should be understood to not be limited to the particular forms disclosed, but on the contrary, the intention is to cover all modifications, and alternatives falling within the scope of the invention as defined by the claims.

### DETAILED DESCRIPTION

In the following description, numerous specific details are set forth in order to provide a thorough understanding of the present disclosure. It will be apparent, however, to one of ordinary skill in the art that the invention disclosed herein may be practiced without these specific details. In other instances, specific numeric references such as "first duct," may be made. However, the specific numeric reference should not be interpreted as a literal sequential order but rather interpreted that the "first duct" is different than a "second duct." Thus, the specific details set forth are merely exemplary. The specific details may be varied from and still be contemplated to be within the scope of the claims. The term "coupled" is defined as meaning connected either directly to the component or indirectly to the component through another component. Further, as used herein, the terms "about," "approximately," or "substantially" for any numerical values or ranges indicate a suitable dimensional tolerance that allows the part or collection of components to function for its intended purpose as described herein.

Off-road vehicles enjoy an enthusiastic following because of their many uses and versatility. As such, off-road vehicles commonly are used for sight-seeing and traveling to areas that may not be accessed by way of standard, paved roads. Given that off-road vehicles typically travel in rough, exotic environments that may subject occupants to extreme temperatures, such as high or cold temperatures typical of desert climates, there is a desire to incorporate climate control amenities into off-road vehicles so as to increase the comfort of the drivers and passengers. Embodiments disclosed herein provide an air conditioning system and methods for controlling air quality within an off-road vehicle.

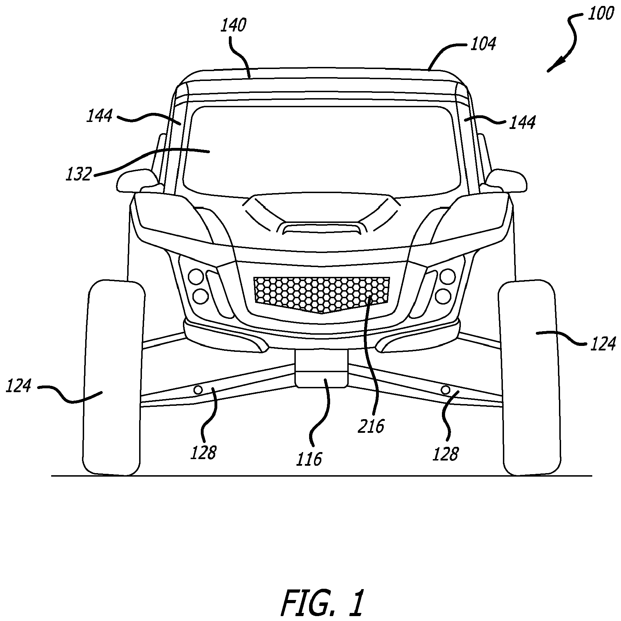

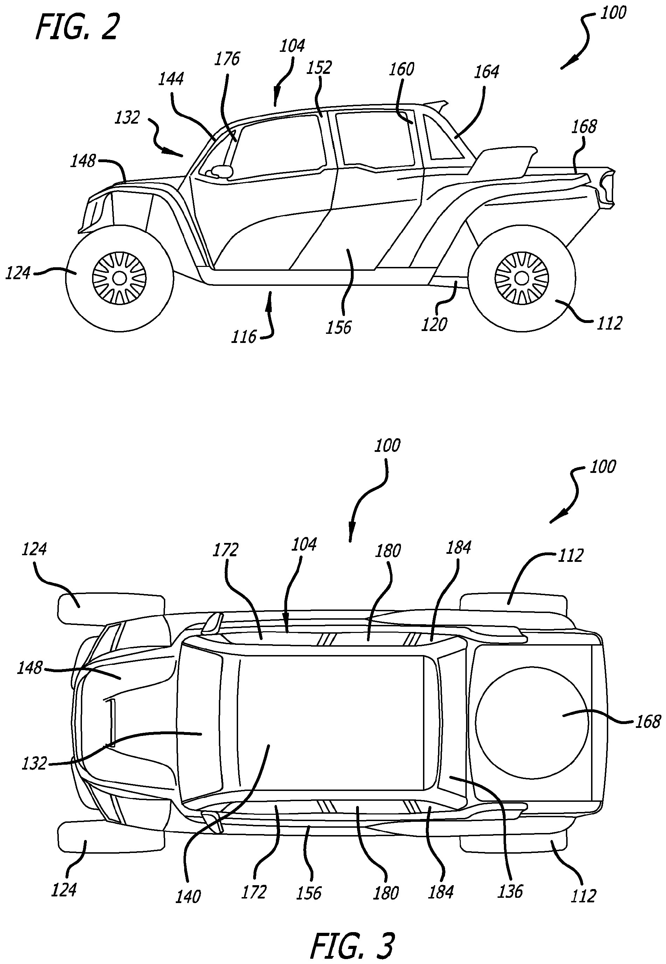

Figures 1-3 show an off-road vehicle 100 that is particularly suitable for implementation of an air conditioning system in accordance with the present disclosure. The off-road vehicle 100 illustrated in Figs. 1-3 generally is of a Utility Task Vehicle (UTV) variety that seats four occupants. The off-road vehicle 100 includes an enclosed cabin 104 and a roll-over protection system (not shown) disposed within the enclosed cabin 104. As shown in Fig. 2, rear wheels 112 of the off-road vehicle 100 may be operably coupled with a chassis 116 by way of a trailing arm suspension system 120. Front wheels 124 may be operably coupled with the chassis 116 by way of a front suspension system 128.

It should be borne in mind that the air conditioning system disclosed herein is not to be limited to implementation in UTVs that seat four people. For example, in some embodiments, the air conditioning system may be incorporated in UTVs that seat two people. In other embodiments, UTVs configured to seat four or more people may include an air conditioning system in accordance with the present disclosure.

As will be appreciated, the enclosed cabin 104 illustrated in Figs. 1-3 is similar to the passenger cabins of on-road vehicles, such as passenger cars and trucks. The enclosed cabin 104 includes a windshield 132 and a rear window 136 that share an intervening roof 140. As best shown in Fig. 3, the roof 140 may be a panel member that extends from the windshield 132 to the rear window 136. The roof 140 generally is reinforced by an interior roll-over protection system. The roof 140 may include a shape and a curvature that matches the shape and curvature of an overhead portion of the interior roll-over protection system, such that the roof 140 may be closely supported by the overhead portion of the roll-over protection system. It is contemplated that the roof 140 may provide additional head protection to occupants, thereby protecting the occupants from potentially serious injuries arising due to, for example, falling rocks that have been kicked up by other vehicles operating ahead of the vehicle 100.

As best shown in Fig. 1, A-pillars 144 extend from a front portion 148 of the vehicle 100, along the sides of the windshield 132 to the roof 140. The A-pillars 144 support the sides of the windshield 132 and generally are reinforced by the interior roll-over protection system mentioned hereinabove. As shown in Fig.2, B-pillars 152 extend from a passenger portion 156 of the vehicle 100 to the roof 140, and C-pillars 160 extend from the passenger portion 156 to the roof 140. In the illustrated embodiment, D-pillars 164 extend from a rear portion 168 of the vehicle 100 to the roof 140. It is contemplated that all of the B-pillars 152, the C-pillars 160, and the D-pillars 164 may be reinforced by the interior roll-over protection system mentioned above.

As best shown in Fig. 3, a front door window 172 is disposed between each pair of A-and B-pillars 144, 152. In the embodiment illustrated in Fig. 2, a forward portion of each front door window 172 comprises a front vent window 176. In some embodiments, the front vent windows 176 may be reinforced by an "A-bar" comprising the interior roll-over protection system, as desired. As shown in Fig. 3, a rear door window 180 is disposed between each pair of B- and C-pillars 152, 160. Similarly, a rear quarter window 184 is disposed between each pair of C- and D-pillars 160, 164. Further, the D-pillars 164 support the sides of the rear window 136. It is contemplated that the front and rear windows 172, 180 respectively comprise portions of the front and rear doors of the vehicle 100, and thus the front and rear windows 172, 180 may be lowered and raised by occupants within the enclosed cabin 104, as desired. Further, in some embodiments, the front vent windows 176 and the rear quarter windows 184 may be configured to opened and closed by occupants within the enclosed cabin 104, without limitation.

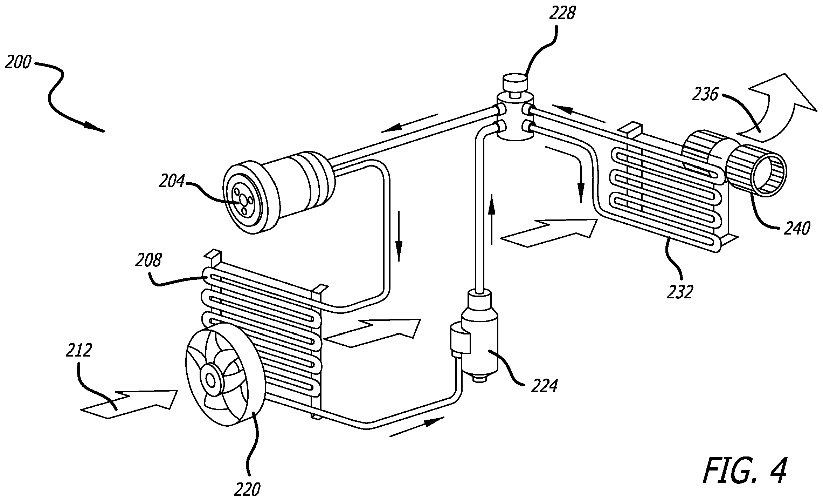

As will be appreciated, based on the foregoing description, the enclosed cabin 104 may prevents a communication of outside air into the cabin 104, such as when all the windows 172, 180 are raised. In hot temperature conditions, such as when traveling in desert climates, it may be desired to cool the air within the enclosed cabin 104 instead of lowering the windows 172, 180. To this end, an air conditioning system, such as an exemplary embodiment of an AC system 200 shown in Fig. 4 may be incorporated into the off-road vehicle 100 in accordance with the present disclosure.

The AC system 200 generally comprises a compressor 204 that is configured to pressurize refrigerant within the AC system 200. In some embodiments, the compressor 204 may be driven by an engine comprising the vehicle 100, and thus the compressor 204 may be located in an engine compartment within the rear portion 168 of the vehicle 100. In some embodiments, the compressor 204 may be driven by way of a separate or dedicated motor. It is contemplated that in such embodiments, the compressor 204 may be located in any advantageous location of the vehicle 100, without limitation. A condenser 208 comprising the AC system 200 typically operates to reduce the temperature and pressure of the refrigerant. As such, the condenser 208 may be located in any location of the vehicle that receives a steady supply of outside air 212. For example, the condenser 208 may be located behind a grill 216 (see Fig. 1) at a front of the off-road vehicle 100, or the condenser 208 may be located at a location where the outside air 212 enters the engine compartment at the rear portion 168 of the vehicle 100. The outside air 212 may be moved through the condenser 208 by way of a fan 220. For instance, the fan 220 may be dedicated to moving outside air 212 through the grill 216 and the condenser 208, or the fan 220 may be a cooling fan for the engine, without limitation.

As will be appreciated, the condenser 208 further operates to move cooled liquid refrigerant to a receiver/dryer 224. The receiver/dryer 224 generally works to separate gaseous refrigerant from liquid refrigerant that is passed on to a thermal expansion valve 228. The receiver/dryer 224 and thermal expansion valve 228 generally monitor the pressure and temperature of the AC system 200 and calculate an exact amount of refrigerant that can be safely passed into an evaporator 232. In some embodiments, an accumulator may be used in lieu of the receiver/dryer 224. In such embodiments, an orifice tube may be used in lieu of the thermal expansion valve 228, without limitation. As shown in Fig. 4, refrigerant exiting the evaporator 232 is passed to the thermal expansion valve 228 before being returned in a gaseous form to the compressor 204.

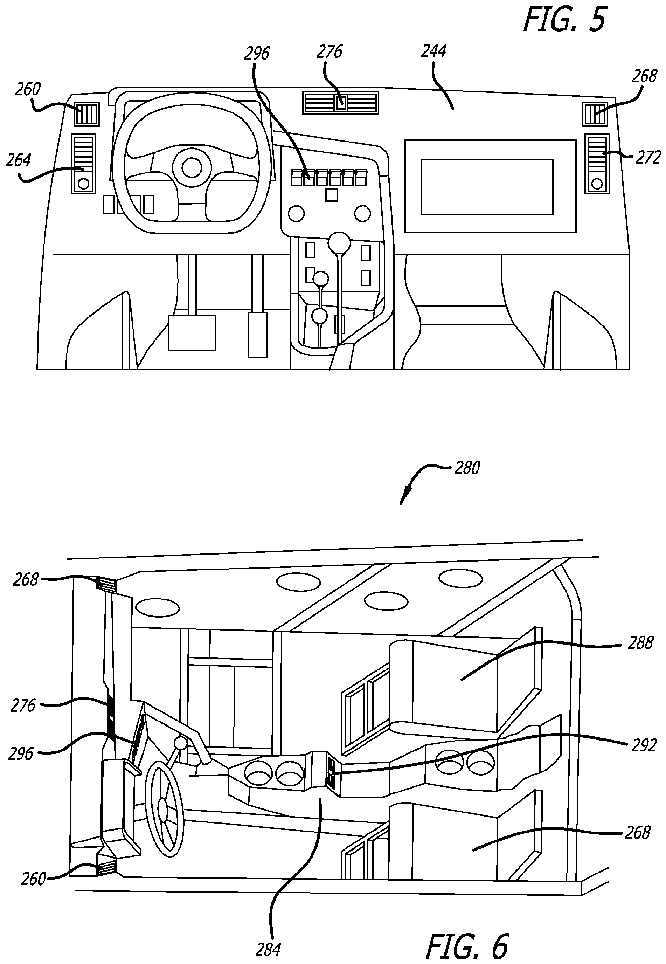

The evaporator 232 typically comprises a heat exchanger that is configured to cool an airstream 236 that is directed through the evaporator 232 and pushed into the enclosed cabin 104 by way of a blower 240. In general, the evaporator 232 and the blower 240 are located in close proximity to the enclosed cabin 104, such that the airstream 236 may be directed into the cabin before increasing in temperature. For example, the evaporator 232 and blower 240 may be located in the front portion 132 of the vehicle 100 in front of a dashboard 244 (see Fig. 5), such that the airstream 236 may be ducted into the enclosed cabin 104. In some embodiments, the evaporator 232 and blower 240 may be housed within the enclosed cabin 104 below the dashboard 244. It is contemplated that the evaporator 232 and blower 240 may be disposed in any of various suitable locations of the vehicle 100 whereby the airstream 236 may be advantageously used to cool the environment within the enclosed cabin 104, without limitation.

Turning, now, to Fig. 5, an exemplary embodiment of a dashboard 244 comprising the enclosed cabin 104 of the off-road vehicle 100 is shown. The dashboard 244 includes multiple ducted vents that are positioned to advantageously direct the cooled airstream 236 to a driver and a front passenger of the off-road vehicle 100. It is contemplated that the ducted vents may be disposed in any of various advantageous locations above or below the dashboard 244 whereby the cooled airstream 236 may be suitably directed toward occupants of the enclosed cabin 104. In the illustrated embodiment of Fig. 5, an upper driver-side vent 260 and a lower driver-side vent 264 are disposed at left-most positions of the dashboard 244. An upper passenger-side vent 268 and a lower passenger-side vent 272 are disposed at right-most positions of the dashboard 244. Further, a center vent 276 is disposed along a midline of the dashboard 244 between the driver-side and passenger-side of the off-road vehicle 100.

The vents 260-276 generally are a louvered variety configured to direct the cooled airstream 236 toward occupants within the vehicle 100. The louvers comprising the vents 260-276 may have fixed orientations or may be adjustable, without limitation. For example, in an embodiment, the upper vents 260, 268 may include louvers that are adjustable along a horizontal plane while the lower vents 264, 272 may include louvers that are adjustable along a vertical plane, such that a driver and a passenger may direct the cooled airstream 236 as desired. Further, in an embodiment, the center vent 276 may be adjustable both vertically and horizontally, such that the driver and passenger may desirable direct the cooled airstream 236 in addition to the airstream 236 received through the vents 260-272. In some embodiments, any one or more of the louvers comprising the vents 260-276 may be adjustable both vertically and horizontally, without limitation.

In some embodiments, any one or more of the vents 260-276 may be configured to enable an adjustment of the quantity of airflow through the vents 260-276. For example, in some embodiments, the airflow through any of the vents 260-276 may be adjusted between a fully open setting and a turned off setting wherein the airstream 236 passing through the vent is substantially suppressed. It is contemplated that in such embodiments, the driver and the passenger may independently control the amount of the cooled airstream 236 received without affecting the cooled airstream 236 directed to each other.

Figure 6 illustrates an exemplary embodiment of rear passenger portion 280 comprising an enclosed cabin 104 that is configured to seat a total of four occupants. The rear portion 280 includes a center console 284 that is disposed between rear passenger seats 288. The center console 284 includes ducted rear passenger vents 292 for supplying the cooled airstream 236 to passengers seated in the rear passenger seats 288. It is contemplated that the center console 284 may house ducts suitable for conducting the cooled airstream 236 from the blower 240 (see Fig. 4) to the rear passenger portion 280.

Similar to the vents 260-276, the rear passenger vents 292 generally are a louvered variety configured to direct the cooled airstream 236 toward the rear passengers of the off-road vehicle 100. The louvers comprising the rear passenger vents 292 may have fixed orientations or may be adjustable, without limitation. In some embodiments, for example, rear passenger vents 292 may be adjustable both vertically and horizontally, thereby enabling each of the rear passengers to independently direct the cooled airstream 236 without affecting the airstream 236 received by the other passenger.

Moreover, the rear passenger vents 292 may be configured to enable an adjustment of the quantity of airflow through the vents 292. In some embodiments, for example, the airflow through the rear passenger vents 292 may be adjusted between a fully open setting and a turned off setting wherein the airstream 236 passing through the vent is substantially suppressed. It is contemplated that, in such embodiments, each of the rear passengers may independently control the amount of the cooled airstream 236 received without affecting the cooled airstream 236 directed to the other passenger.

With reference, again, to Fig. 5, the dashboard 244 preferably includes climate control switches 296 that enable the occupants of the enclosed cabin 104 to control the operation of the AC system 200 (see Fig. 4). As shown in the illustrated embodiment of Fig. 5, the climate control switches 296 may be disposed in a central location of the dashboard 244 such that both the driver and the front passenger have access to the climate control switches 296. It is contemplated that the climate control switches 296 provide at least an On/Off switch, a temperature selector, and an airflow control. As will be appreciated, the On/Off switch facilitates turning the AC system 200 on and off, as desired. The temperature selector generally facilitates controlling the degree to which the AC system 200 cools the airstream 236. The airflow control facilitates controlling the quantity of the airstream 236 that is directed into the enclosed cabin 104. It is contemplated that the climate control switches 296 may be implemented in the form of any of various suitable devices for operating the AC system 200, such has, by way of non-limiting example, Single Pole Single Throw Switch (SPST), Single Pole Double Throw Switch (SPDT), Double Pole Single Throw Switch (DPST), Double Pole Double Throw Switch (DPDT), Push Button Switch, Toggle Switch, Limit Switch, Float Switches, Flow Switches, Pressure Switches, Temperature Switches, Rotary Switches, and the like. Further, in some embodiments, the climate control switches 296 may comprise electronic switches, such as, by way of non-limiting example, any of Bipolar Transistors, Power Diodes, MOSFETs, IGBTs, SCRs, TRIACs, DIACs, Gate Turn-Off Thyristors, and the like, without limitation.

While the invention has been described in terms of particular variations and illustrative figures, those of ordinary skill in the art will recognize that the invention is not limited to the variations or figures described. In addition, where methods and steps described above indicate certain events occurring in certain order, those of ordinary skill in the art will recognize that the ordering of certain steps may be modified and that such modifications are in accordance with the variations of the invention. Additionally, certain of the steps may be performed concurrently in a parallel process when possible, as well as performed sequentially as described above. To the extent there are variations of the invention, which are within the spirit of the disclosure or equivalent to the inventions found in the claims, it is the intent that this patent will cover those variations as well. Therefore, the present disclosure is to be understood as not limited by the specific embodiments described herein, but only by scope of the appended claims.

## Claims

1. A climate control system for an off-road vehicle, comprising:
an enclosed cabin (104) comprising the off-road vehicle;
an air conditioning system for cooling an airstream; and
one or more ducted vents (260 - 276) for directing the airstream into the enclosed cabin.

2. The climate control system of claim 1, wherein the air conditioning system includes a compressor (204) that may be disposed in any advantageous location of the off-road vehicle.

3. The climate control system of claim 2, wherein the compressor is located in an engine compartment within a rear portion of the off-road vehicle.

4. The climate control system of claim 2 or 3, wherein the compressor is driven by way of a separate or dedicated motor.

5. The climate control system of any preceding claim, wherein a condenser (208) comprising the air conditioning system may be disposed in any location of the off-road vehicle that receives a steady supply of outside air.

6. The climate control system of claim 5, wherein the outside air is moved through the condenser by way of a dedicated fan (220).

7. The climate control system of any preceding claim, wherein the air conditioning system includes an evaporator (232) configured for cooling the airstream.

8. The climate control system of claim 7, wherein a blower (240) is configured to direct the airstream through the evaporator and push the airstream into the enclosed cabin and optionally wherein the evaporator and the blower are located in close proximity to the enclosed cabin such that the airstream may be directed into the cabin before increasing in temperature.

9. The climate control system of claim 8, wherein the evaporator and the blower are disposed in a front portion of the off-road vehicle in front of a dashboard, or wherein the evaporator and the blower are housed within the enclosed cabin below a dashboard.

10. The climate control system of any preceding claim, wherein the one or more ducted vents are disposed within the enclosed cabin and positioned to advantageously direct the airstream to occupants within the enclosed cabin.

11. The climate control system of any preceding claim, wherein the air conditioning system includes climate control switches (296) disposed in a dashboard of the off-road vehicle and configured to enable occupants of the enclosed cabin to control operation of the air conditioning system.

12. The climate control system of claim 11, wherein the climate control switches are disposed in a central location of the dashboard such that both the driver and the front passenger have access to the climate control switches, and/or wherein the climate control switches provide at least an On/Off switch, a temperature selector, and an airflow control.

13. A method for a climate control system for an off-road vehicle, comprising:
forming an enclosed cabin comprising the off-road vehicle;
incorporating an air conditioning system into the off-road vehicle;
disposing one or more ducted vents within the enclosed cabin;
configuring the air conditioning system for cooling an airstream; and
routing the airstream into the enclosed cabin by way of the one or more ducted vents.

14. The method of claim 13, wherein incorporating includes disposing a condenser in any location of the off-road vehicle that receives a steady supply of outside air, and optionally wherein disposing includes mounting the condenser behind a grill at a front of the off-road vehicle.

15. The method of claim 13, wherein incorporating includes disposing an evaporator and a blower in close proximity to the enclosed cabin such that the airstream may be directed into the cabin before increasing in temperature.
